# EUROPÄISCHE PATENTSCHRIFT

(11) **EP 3 324 795 B1**
(45) Veröffentlichungstag und Bekanntmachung des Hinweises auf die Patenterteilung: **06.02.2019**
(21) Anmeldenummer: 16741846.6
(22) Anmeldetag: 18.07.2016
(51) Int. Cl.: A47G 21/02, A47J 43/28

(54) **AROMATISCHES BESTECKELEMENT AUS FASSHOLZ**
AROMATIC CUTLERY ELEMENT MADE OF BARREL WOOD
COUVERT DE TABLE AROMATIQUE EN MERRAIN

(30) Priorität: 24.07.2015 AT 506522015
(43) Veröffentlichungstag der Anmeldung: 30.05.2018
(73) Patentinhaber: Mass, Michael, 1090 Wien (AT); Drucker, Ludwiga, 1220 Wien (AT)
(72) Erfinder: Mass, Michael, 1090 Wien (AT); Drucker, Ludwiga, 1220 Wien (AT)
(74) Vertreter: Babeluk, Michael
(86) Internationale Anmeldenummer: PCT/AT2016/050249
(87) Internationale Veröffentlichungsnummer: WO 2017/015682

(56) Entgegenhaltungen:
- DE-U1-202009 013 083
- JP-A- 2008 220 294
- US-A- 3 964 161
- US-A1- 2008 179 328
- US-A1- 2011 027 429

## Beschreibung

Die Erfindung betrifft ein dekoratives Besteckelement aus Holz, vorzugsweise Kochlöffel, Salatbesteck, Grillzange, Kochstäbchen, Essstäbchen und dergleichen, sowie ein Verfahren zur Herstellung eines dekorativen Besteckelementes aus Holz.

Besteckelemente aus Holz werden - vor allem im privaten Bereich - beispielsweise zum Kochen, Zubereitung von Salaten oder zum Grillen verwendet, dienen jedoch sehr oft auch als Geschenks- und/oder Dekorationsobjekte, beispielsweise bei der Verleihung von Preisen an Köche (Kochlöffel) oder Grillmeister (Grillzange) oder auch der Dekoration von Schaukästen vor oder in Restaurants und als Dekorationselemente in Küchen, Kellerstüberl und Weinkeller.

In der US 3,964,161 wird beispielsweise ein hölzernes Campingwerkzeug in Form eines Holzlöffels beschrieben, dessen Stielbereich sich verbreitert und in Form einer Spachtel ausgeführt ist. Das Kochwerkzeug wird einstückig aus einem Stück Holz (Kiefer, Eiche, Birke, etc.) ausgeschnitten bzw. ausgefräst und entsprechend in Form gebracht.

Des Weiteren ist aus der DE 43 16 657 A1 ein Besteckteil aus Schälholz, insbesondere in Form einer Gabel, eines Messers oder eines Löffels, bekannt, das aus einem Ausgangsmaterial besteht, welches herstellungsbedingt eine im Wesentlichen gleiche Dicke aufweist. Zur Verbesserung der Ästhetik und zur besseren Handhabung weisen die Besteckteile mindestens eine Krümmung am Griffelement und mindestens eine Krümmung am Benutzungselement auf, wobei die von der ebenen Gestaltung abweichende Form einen ununterbrochenen Faserverlauf des Holzwerkstoffes aufweist.

Aus der EP 2 386 228 A2 ist ein Rührbesteck, insbesondere in Form eines Löffels, bekannt, welches aus einer oder mehreren gehärteten Massen besteht, welche sich durch Rühren in Flüssigkeiten (heiß, warm oder kalt) auflösen und diesen dadurch Geschmack, Süße oder Aroma verleihen. Der Löffel oder das Rührbesteck kann vollständig oder zum Teil aus einer oder mehreren festen und/oder gehärteten Massen bestehen, und sich nach einiger Zeit zur Gänze auflösen. Weiters kann auch ein festes nicht konsumierbares Halteteil aus Holz oder Kunststoff vorgesehen sein, auf das die konsumierbare Masse aufgetragen ist.

Schließlich ist aus der DE 26 29 043 ein Stäbchen aus Holz oder Kunststoff, insbesondere Zahnstocher oder Partystäbchen, bekannt, welches einen sich bei Gebrauch auflösenden Überzug und/oder eine Imprägnierung aufweist.

Aufgabe der Erfindung ist es das ästhetische Erscheinungsbild und die sinnliche Wahrnehmung eines dekorativen Besteckelementes aus Holz zu verbessern und dessen Eignung als Geschenksobjekt aber auch als Kochutensil zu erhöhen.

Diese Aufgabe wird erfindungsgemäß dadurch gelöst, dass das Besteckelement aus gebrauchtem Fassholz gefertigt ist, welches durch die Lagerung, Gärung oder Reifung eines flüssigen Genussmittels (z.B. Wein (rot und weiß), Cognac, Sherry, Whiskey oder auch Balsamico-Essig) eine aromatische Kontaktschicht ausgebildet hat, wobei die Kontaktschicht eine durchschnittliche Dicke von ca. 1 mm bis 5 mm aufweist und deren innerer Rand zum Vollholz unregelmäßig bzw. unscharf ausgebildet ist, und wobei die aromatische Kontaktschicht Teile der Oberfläche des Besteckelementes bildet.

Die erfindungsgemäßen Besteckelemente zeichnen sich vor allem dadurch aus, dass die aromatische Kontaktschicht an deren Oberfläche Aromastoffe abgibt, die bei der Verwendung der Besteckelemente eine angenehme olfaktorische Wahrnehmung hervorrufen und bei einem Kontakt mit Speisen auch Geschmacksstoffe an die Speisen abgeben können.

Werden beispielsweise Fassdauben eines Barriquefasses für die Herstellung eines Kochlöffels verwendet, so weist dieser durch die Farbunterschiede zwischen dem Vollholz der Fassdauben und den Rottönen der aromatischen Kontaktschicht interessante Gestaltungsmöglichkeiten auf, die die Eignung als Geschenkartikel, Werbeartikel oder auch als Sammelobjekt erhöhen. Der Kochlöffel verströmt ein anregendes Rotweinbouquet und kann in Kontakt mit Speisen Aromastoffe des Rotweins an die Speisen abgeben. Der Kochlöffel kann beispielsweise in einer Geschenkverpackung angeboten werden, die Hinweise auf das Weingut und den im Barriquefass gekelterten Wein enthält, oder in einer Verpackung zusammen mit dem entsprechenden Wein.

Erfindungsgemäß kann die aromatische Kontaktschicht bei einem Kochlöffel, bestehend aus einer Löffelschale und einem Löffelstiel, beispielsweise den äußeren Rand der Löffelschale und die Oberseite des Löffelstiels bilden.

Insbesondere für Sammler können die einzelnen Kochlöffel auf der Rückseite des Stiels mit einer fortlaufenden Seriennummer mittel Lasergravur markiert sein.

Gemäß einer Ausführungsvariante der Erfindung kann die aromatische Kontaktschicht bei einer Grillzange, bestehend aus zwei an der Basis verbundenen Zangenteilen, auf den einander zugekehrten Oberflächen der Zangenteile ausgebildet sein.

Gemäß einer weiteren Ausführungsvariante der Erfindung kann die aromatische Kontaktschicht bei einem Kochstäbchen oder Essstäbchen an einer im Wesentlichen von einem Griffteil bis zur Spitze des Koch- oder Essstäbchens reichenden Flachseite ausgebildet sein.

Ein erfindungsgemäßes Verfahren zur Herstellung eines dekorativen Besteckelementes aus Holz weist folgende Schritte auf:
- Bereitstellen von gebrauchtem Fassholz, das durch den Kontakt mit einem flüssigen Genussmittel eine aromatische Kontaktschicht ausgebildet hat;
- Säuberung von Ablagerungen an der aromatischen Kontaktschicht, beispielsweise von Weinstein;
- Herstellung der Außenkontur des Besteckelementes durch Sägen und/oder Fräsen, wobei die aromatische Kontaktschicht im Wesentlichen unbehandelt bleibt; sowie
- Schleifen und Polieren des Besteckelementes, vorzugsweise von Hand, wobei die aromatische Kontaktschicht lediglich oberflächlich poliert wird.

Die Erfindung wird im Folgenden anhand von Ausführungsbeispielen näher erläutert. Es zeigen:
- Fig. 1: ein erfindungsgemäßes Besteckelement in Form eines Kochlöffels in Draufsicht;
- Fig. 2: den Kochlöffel gemäß Fig. 1 in einer Seitenansicht;
- Fig. 3: eine Schnittdarstellung gemäß Linie III - III des Kochlöffels in Fig. 2;
- Fig. 4: eine Ausführungsvariante des erfindungsgemäßen Besteckelementes in Form einer Grillzange in einer Seitenansicht;
- Fig. 5: eine Ausführungsvariante des erfindungsgemäßen Besteckelementes in Form eines Kochstäbchens in einer Seitenansicht; sowie
- Fig. 6: das Kochstäbchen gemäß Fig. 5 in einer Ansicht von der Spitze.

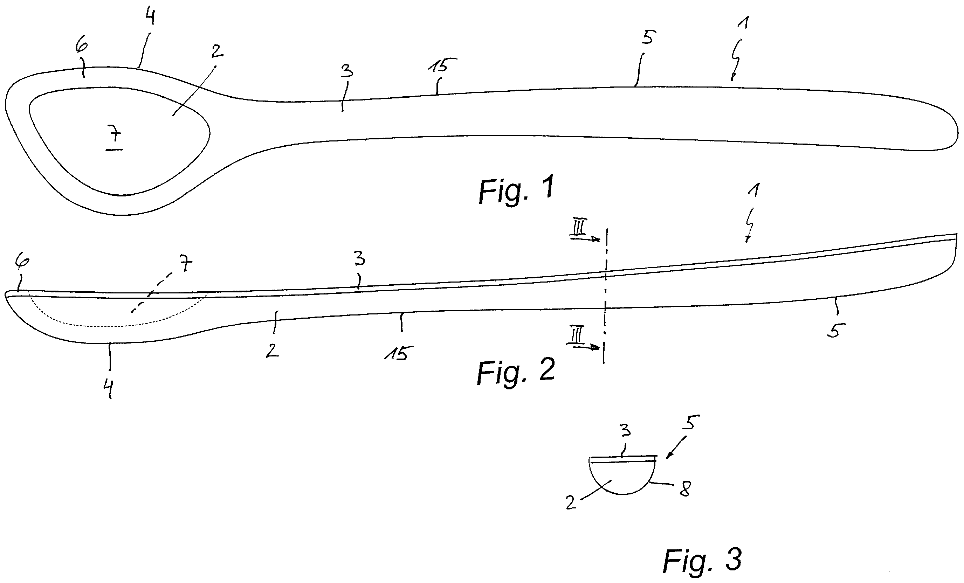

Die in den Fig. 1 bis Fig. 3 dargestellte Ausführungsvariante eines erfindungsgemäßen Besteckelementes 1 aus Holz, weist die Form eines Kochlöffels 15 auf, welcher im Wesentlichen aus einem Körper 2 aus Vollholz (Fassholz) besteht und an Teilen der Oberfläche eine aromatische Kontaktschicht 3 aufweist, die sich auf der Innenseite von gebrauchtem Fassholz ausbildet und durch die Lagerung, Gärung oder Reifung eines flüssigen Genussmittels (z.B. Wein (rot und weiß), Cognac, Sherry, Whiskey oder auch Balsamico-Essig) entsteht und Aromastoffe dieser Genussmittel enthält. Die Aromastoffe werden von der Kantaktschicht 3 als Geruchsstoffe an die Luft oder als Geschmacksstoffe an Speisen abgegeben, die mit der Kontaktschicht 3 in Berührung kommen.

Die Kontaktschicht 3 weist eine durchschnittliche Dicke von ca. 1 mm bis 5 mm auf, wobei der innere Rand zum Vollholz unregelmäßig bzw. unscharf ausgebildet ist.

Zu Herstellung der erfindungsgemäßen Besteckelemente 1 werden Fassdauben oder Fassbodenelemente von beispielsweise Barriquefässern; Sherryfässern, Whiskeyfässern, Cognacfässern sowie von Fässern, in welchen Balsamico-Essig gereift ist, verwendet.

Das Besteckelement 1 gemäß Fig. 2 ist beispielsweise aus einer Fassdaube gefertigt, wobei es in seiner Längserstreckung der vorgegebenen Krümmung der Fassdaube folgt. Das Besteckelement 1 kann z.B. durch Sägen und/oder Fräsen einstückig aus einer Fassdaube hergestellt werden, wobei darauf geachtet wird, dass die aromatische Kontaktschicht 3 im Wesentlichen unverändert erhalten bleibt.

Beim dargestellten Beispiel, einem Kochlöffel 15 bestehend aus einer Löffelschale 4 und einem Löffelstiel 5, bildet die aromatische Kontaktschicht 3 den äußeren Rand 6 der die Löffelmulde 7 begrenzt, sowie die Oberseite des Löffelstiels 5.

Die Schnittdarstellung durch den Löffelstiel 5 gemäß Fig. 3 zeigt dass die Oberseite des Löffelstiels 5 mit der aromatischen Kontaktschicht 3 flach ausgebildet ist und die Unterseite im Querschnitt eine gerundete Kontur 8 aufweist. Varianten mit flacher Kontur 8 oder abgerundeten Kanten sind jedoch ebenfalls möglich.

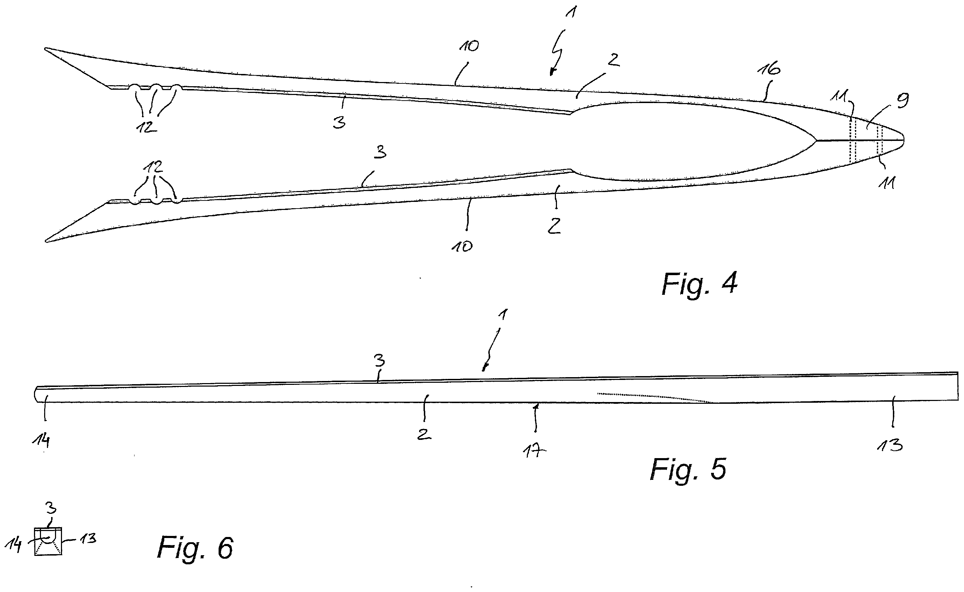

Die Ausführungsvariante gemäß Fig. 4 zeigt eine Grillzange 16, mit zwei an der Basis 9 - beispielsweise durch Schrauben 11 oder Dübel - verbundenen Zangenteilen 10, wobei die aromatische Kontaktschicht 3 auf den aneinander zugekehrten Oberflächen der Zangenteile 10 ausgebildet ist. Der Haltebereich der Grillzange 16 ist mit Querrillen 12 versehen, die die Kontaktschicht 3 durchsetzen. Beim Auflegen oder Wenden von Grillgut können Aromastoffe aus der aromatischen Kontaktschicht 3 auf das Grillgut übertragen werden.

Die Ausführungsvariante gemäß Fig. 5 und 6 zeigt ein Besteckelement 1 in Form eines Kochstäbchens 17 das mit einer Länge von ca. 340 mm und einem Querschnitt von ca. 10 x 10 mm am Griffteil 13, etwas größer ist, als ein herkömmliches Essstäbchen. Die aromatische Kontaktschicht 3 ist hier an einer im Wesentlichen vom Griffteil 13 bis zur Spitze 14 des Kochstäbchens 17 reichenden Flachseite ausgebildet. Bis zur Spitze 14 verjüngt sich das Kochstäbchen auf einen bei der aromatischen Kontaktschicht 3 abgeflachten, unten ovalen Querschnitt von ca. 5 x 5 mm (siehe Fig. 6).

## Patentansprüche

1. Dekoratives Besteckelement (1) aus Holz, vorzugsweise Kochlöffel (15), Salatbesteck, Grillzange (16), Kochstäbchen (17), Essstäbchen und dergleichen, **dadurch gekennzeichnet, dass** das Besteckelement (1) aus gebrauchtem Fassholz gefertigt ist, welches durch die Lagerung, Gärung oder Reifung eines flüssigen Genussmittels eine aromatische Kontaktschicht (3) ausgebildet hat, wobei die Kontaktschicht (3) eine durchschnittliche Dicke von ca. 1 bis 5 mm aufweist und deren innerer Rand zum Vollholz unregelmäßig bzw. unscharf ausgebildet ist, und wobei die aromatische Kontaktschicht (3) Teile der Oberfläche des Besteckelementes (3) bildet.

2. Besteckelement (1) nach Anspruch 1, **dadurch gekennzeichnet, dass** das Besteckelement (1) oder zumindest ein Teil (10) des Besteckelementes (1) aus einer Fassdaube gefertigt ist, und das Besteckelement (1) in seiner Längserstreckung der vorgegebenen Krümmung der Fassdaube folgt.

3. Besteckelement (1) nach Anspruch 1, **dadurch gekennzeichnet, dass** das Besteckelement (1) einstückig aus einer Fassdaube oder einem Fassbodenelement durch Sägen oder Fräsen hergestellt ist, wobei die aromatische Kontaktschicht (3) im Wesentlichen erhalten bleibt.

4. Besteckelement (1) nach einem der Ansprüche 1 bis 3, **dadurch gekennzeichnet, dass** die aromatische Kontaktschicht (3) bei einem Kochlöffel (15), bestehend aus einer Löffelschale (4) und einem Löffelstiel (5), den äußeren Rand (6) der Löffelschale (4) und die Oberseite des Löffelstiels (5) bildet.

5. Besteckelement (1) nach Anspruch 4, **dadurch gekennzeichnet, dass** die Oberseite des Löffelstiels (5) mit der aromatischen Kontaktschicht (3) flach ausgebildet ist, und die Unterseite im Querschnitt eine gerundete Kontur (8) aufweist.

6. Besteckelement (1) nach einem der Ansprüche 1 bis 3, **dadurch gekennzeichnet, dass** die aromatische Kontaktschicht (3) bei einer Grillzange (16), bestehend aus zwei an der Basis (9) verbundenen Zangenteilen (10), auf den einander zugekehrten Oberflächen der Zangenteile (10) ausgebildet ist.

7. Besteckelement (1) nach einem der Ansprüche 1 bis 3, **dadurch gekennzeichnet, dass** die aromatische Kontaktschicht (3) bei einem Kochstäbchen (17) oder Essstäbchen an einer im Wesentlichen von einem Griffteil (13) bis zur Spitze (14) des Koch- oder Essstäbchens (17) reichenden Flachseite ausgebildet ist.

8. Verfahren zur Herstellung eines dekorativen Besteckelementes nach einem der Ansprüche 1-7, **gekennzeichnet durch** folgende Schritte:
- Bereitstellen von gebrauchtem Fassholz, das durch den Kontakt mit einem flüssigen Genussmittel eine aromatische Kontaktschicht (3) ausgebildet hat;
- Säuberung von Ablagerungen an der aromatischen Kontaktschicht (3), beispielsweise von Weinstein;
- Herstellung der Außenkontur des Besteckelementes (1) durch Sägen und/ oder Fräsen, wobei die aromatische Kontaktschicht (3) im Wesentlichen unbehandelt bleibt; sowie
- Schleifen und Polieren des Besteckelementes (1), vorzugsweise von Hand, wobei die aromatische Kontaktschicht (3) lediglich oberflächlich poliert wird.

9. Verfahren nach Anspruch 8, **dadurch gekennzeichnet, dass** als Fassholz Fassdauben oder Fassbodenelemente von Barriquefässern, Sherryfässern, Whiskeyfässern, Cognacfässern sowie von Fässern, in welchen Balsamico-Essig gereift ist, verwendet werden.

## Claims

1. Decorative cutlery element (1) made of wood, preferably a cooking spoon (15), salad cutlery, grill tongs (16), cooking sticks (17), chopsticks and the like, **characterised in that** the cutlery element (1) is made of used barrel wood which has formed an aromatic contact layer (3) by the storage, fermentation or maturation of a liquid luxury product, wherein the contact layer (3) has an average thickness of approx. 1 to 5 mm and whose inner edge towards the solid wood is formed irregular or unsharp, and wherein the aromatic contact layer (3) forms parts of the surface of the cutlery element (3).

2. Cutlery element (1) according to claim 1, **characterised in that** the cutlery element (1) or at least part (10) of the cutlery element (1) is produced from a barrel stave, and the cutlery element (1) follows the predetermined curvature of the barrel stave in its longitudinal extension.

3. Cutlery element (1) according to claim 1, **characterised in that** the cutlery element (1) is integrally produced from a barrel stave or a barrel bottom element by sawing or milling, wherein the aromatic contact layer (3) is essentially retained.

4. Cutlery element (1) according to one of claims 1 to 3, **characterised in that** the aromatic contact layer (3) in a cooking spoon (15), consisting of a spoon shell (4) and a spoon handle (5), forms the outer edge (6) of the spoon shell (4) and the upper side of the spoon handle (5).

5. Cutlery element (1) according to claim 4, **characterised in that** the upper side of the spoon handle (5) is flat with the aromatic contact layer (3), and the underside has a rounded contour (8) in cross-section.

6. Cutlery element (1) according to one of claims 1 to 3, **characterised in that** the aromatic contact layer (3) in a grill tong (16), consisting of two tong parts (10) connected to the base (9), is formed on the mutually facing surfaces of the tong parts (10).

7. Cutlery element (1) according to one of claims 1 to 3, **characterised in that** the aromatic contact layer (3) in a cooking stick (17) or chopsticks is formed on a flat side extending substantially from a handle part (13) to the tip (14) of the cooking stick or chopstick (17).

8. Method for manufacturing a decorative cutlery element according to one of claims 1 to 7, **characterised by** the following steps:
- provision of used barrel wood which has formed an aromatic contact layer (3) through contact with a liquid luxury product;
- cleaning of deposits on the aromatic contact layer (3), e.g. tartar;
- production of the outer contour of the cutlery element (1) by sawing and/or milling, wherein the aromatic contact layer (3) remains essentially untreated; and
- grinding and polishing the cutlery element (1), preferably by hand, wherein the aromatic contact layer (3) is only surface-polished.

9. Method according to claim 8, **characterised in that** barrel staves or barrel bottom elements of barrique barrels, sherry barrels, whiskey barrels, cognac barrels and barrels in which balsamic vinegar has matured are used as barrel wood.

## Revendications

1. Elément de couvert décoratif (1) en bois, de préférence cuillère en bois (15), couvert à salade, pince à grillades (16), baguette de cuisine (17), baguettes et similaires,
**caractérisé en ce que**
l'élément de couvert (1) est réalisé en un bois de fût usagé, comportant une couche de contact aromatique (3) obtenue par stockage, fermentation ou maturation d'un produit savoureux liquide, la couche de contact (3) ayant une épaisseur moyenne d'environ 1 à 5 mm et son bord interne étant non irrégulier ou non aigu par rapport au bois massif, et la couche de contact (3) formant des parties de la surface de l'élément de couvert (3).

2. Elément de couvert (1) conforme à la revendication 1,
**caractérisé en ce que**
l'élément de couvert (1) ou au moins une partie (10) de l'élément de couvert (1) est fabriqué à partir d'une douve de fût et l'extension longitudinale de l'élément de couvert (1) suit, la courbure prédéfinie de la douve de fût.

3. Elément de couvert (1) conforme à la revendication 1,
**caractérisé en ce que**
l'élément de couvert (1) est réalisé en une seule pièce à partir d'une douve de fût ou d'un élément de fond de fût par sciage ou fraisage, la couche de contact aromatique (3) restant essentiellement conservée.

4. Elément de couvert (1) conforme à l'une des revendications 1 à 3,
**caractérisé en ce que**
dans le cas d'une cuillère en bois (15) constituée par une coupelle de cuillère (4) et un manche de cuillère (5) la couche de contact aromatique (3) forme le bord externe (6) de la coupelle de cuillère (4) et le côté supérieur du manche de cuillère (5).

5. Elément de couvert (1) conforme à la revendication 4,
**caractérisé en ce que**
la face supérieure du manche de cuillère (5) comportant la couche de contact aromatique (3) est plate et la face inférieure a en section un contour arrondi (8).

6. Elément de couvert (1) conforme à l'une des revendications 1 à 3,
**caractérisé en ce que**
dans le cas d'une pince de grillades (16) constituée de deux parties de pince (10) reliées à leurs bases (9) la couche de contact aromatique (3) est située sur les surfaces des parties de pince (10) tournées l'une vers l'autre.

7. Elément de couvert (1) conforme à l'une des revendications 1 à 3,
**caractérisé en ce que**
dans le cas d'une baguette de cuisine (17) ou de baguettes la couche de contact aromatique (3) est située sur une face plate s'étendant essentiellement de la partie de préhension (13) jusqu'à la pointe (14) de cette(ces) baguette(s) (17).

8. Procédé de fabrication d'un élément de couvert décoratif conforme à l'une des revendications 1 à 7,
**caractérisé en ce qu'**il
comporte les étapes suivantes consistant à :
se procurer un bois de fût usagé comportant une couche de contact aromatique (3) formée par contact avec un produit savoureux liquide,
éliminer des dépôts situés sur la couche de contact aromatique (3), par exemple du tartre.
fabriquer le contour externe de l'élément de couvert (1) par sciage et/ou fraisage, la coche de contact aromatique (3) restant essentiellement non traitée, et
meuler et polir l'élément de couvert (1), de préférence manuellement, la couche de contact aromatique (3) étant uniquement polie en surface.

9. Procédé conforme à la revendication 8,
**caractérisé en ce qu'**
en tant que bois de fût on utilise des douves de fût ou des éléments de fond de fût, de barriques de vin, de fûts de sherry, de fûts de whisky, de fûts de cognac ou de fûts dans lesquels du vinaigre balsamique a été muri.
